# EUROPEAN PATENT SPECIFICATION

(11) **EP 2 845 460 B1**
(45) Date of publication and mention of the grant of the patent: **29.11.2017**
(21) Application number: 14184114.8
(22) Date of filing: 09.09.2014
(51) Int. Cl.: A01D 34/90, B25G 1/10

(54) **Grip for portable work machine and brush cutter comprising the same**
Griff für eine tragbare Arbeitsmaschine und Rasentrimmer damit
Poignée pour machine de travail portative et débroussailleuse comprenant celle-ci

(30) Priority: 09.09.2013 JP 2013186586
(43) Date of publication of application: 11.03.2015
(73) Proprietor: Yamabiko Corporation, Ohme-shi, Tokyo 198-8760 (JP)
(72) Inventor: Ito, Tomoki, Fussa-shi, Tokyo 197-0023 (JP); Takeda, Masaki, Ohme-shi, Tokyo 198-0024 (JP); Chiba, Mitsutane, Ohme-shi, Tokyo 198-0024 (JP); Tada, Osamu, Ohme-shi, Tokyo 198-0021 (JP)
(74) Representative: Zimmermann & Partner Patentanwälte mbB

(56) References cited:
- FR-A1- 2 901 034
- JP-A- 2013 138 689
- US-A1- 2007 067 947
- US-A1- 2009 183 591

## Description

### TECHNICAL FIELD

The present invention relates to a portable work machine having an operation handle and a grip, and typically relates to a portable work machine in the form of a brush cutter or a power blower.

### BACKGROUND ART

As a portable work machine provided with a drive source, there are a handheld-type work machine (e.g., Japanese Utility Model Laid-Open No. Heisei 3-92919), and a backpack-type work machine (e.g., Japanese Patent Laid-Open No. 2013-92073). The handheld-type work machine has a drive source at a rear end portion thereof. On the other hand, the backpack-type work machine is of a type in which an operator carries an engine as the drive source on his/her back. The portable work machine has an operation handle. An operator grips the operation handle with his/her hand(s) to perform a work. Typical examples of the portable work machine are a power blower (Japanese Patent Laid-Open No. 2013-44305), and a brush cutter (Japanese Patent Laid-Open No. 2003-225012).

Japanese Patent Laid-Open No. 2003-225012 discloses a brush cutter. The brush cutter is used for cutting weeds and shrubs growing in fields and forests. The brush cutter includes a cutting blade that is located apart from a power source, a shaft that transmits a rotational force to the cutting blade, and an operation rod that surrounds the shaft.

An operator reciprocates the operation rod in a right and left direction and in a vertical direction to cut plants. To accurately perform the work, grips for right hand and left hand are installed on a handle that extends in the right and left direction of the operation rod. The operator grips the right and left grips to perform the work.

The bush cutter disclosed in Japanese Patent Laid-Open No. 2003-225012 includes an elbow pad, and further includes a grip mounted to a single handle that is erected from the operation rod. The grip can be gripped with a right or left hand of the operator. The grip has a grip section of a circular shape in cross section, and a flange section of a circular shape in cross section that is located on an upper end of the grip section. The flange section projects outward from the grip section. When the operator grips the erected grip with, for example, his/her right hand, the operator grips the grip with the right hand in a state in which his/her right elbow is placed on the elbow pad.

Japanese Patent Laid-Open No. 2009-183188 discloses a brush cutter including an elbow pad similarly to Japanese Patent Laid-Open No. 2003-225012. Japanese Patent Laid-Open No. 2009-183188 discloses a grip mounted to a single handle that can be positioned in any direction from an operation rod. When the single handle is positioned so as to extend in, for example, a right lateral direction, an operator can grip the grip in a state in which the palm of his/her right hand is turned up. The grip disclosed in Japanese Patent Laid-Open No. 2009-183188 also comprises a grip section of a circular shape in cross section, and a flange section of a circular shape in cross section that is located on an end of the grip section and projects outward from the grip section. When an operator grips the grip extending in the lateral direction with, for example, his/her right hand, the operator can grip the grip in a state in which his/her right elbow is placed on the elbow pad.

Japanese Utility Model Laid-Open No. Heisei 3-92919 discloses grips respectively arranged on a right end and a left end of a handle that extends rightward and leftward from an operation rod. Each of the right and left grips includes a first grip section that extends in a lateral direction, and a second grip section that extends upward and downward or downward only from a distal end of the first grip section. That is, in Japanese Utility Model Laid-Open No. 3-92919, the grip has a lateral T shape profile or an inverted L shape profile. In the T-shaped or L-shaped grip, both the first and second grip sections have a circular cross-sectional surface.

Japanese Patent Laid-Open No. 2013-78268 discloses a brush cutter including a handle that extends rightward and leftward from an operation rod similarly to Japanese Utility Model Laid-Open No. Heisei 3-92919. The handle has a U shape with an intermediate portion in a right and left direction bent upward. Grips are arranged at right and left end portions of the handle that extend diagonally upward.

The grips are elastic moldings of rubber or the like. The grips are fitted to the right and left end portions of the handle. Each of the right and left grips includes a grip section of an elliptical shape in cross section with a long axis extending in a front and rear direction, and a short axis extending in a lateral direction. The left grip out of the right and left grips includes a flange section of a circular shape in cross section. The flange section projects outward at an upper end of the grip section. The flange section is rotatable about the axis of the grip section.

Japanese Patent Laid-Open No. 2013-78268 discloses a modification of the left grip. The modification includes a structure in which the flange section is connected to the grip section via a ball joint. According to the modification, the flange section is rotatable and also swingable about the ball joint.
US patent application 2009/0183591 discloses a hand grip with half-shells that is constructed so as to be able to be fastened to a tubular pipe. The hand grip is provided with a mounting opening for the tubular pipe which on the one hand is securely fastened to the tube and on the other hand does not have any intrusive bores in the grip region, in which there is to be a generous space available for a grip mechanism.
US patent application 2007/0067947 discloses an implement comprising a first handle, on which are disposed control elements for the implement, and a second handle. The first handle is adjustable between a first operating position for a two-handed operation in which the implement is adapted to be guided by both the first handle and the second handle, and a second operating position for one-handed operation in which the implement is adapted to be guided by the first handle.
Japanese Patent Laid-Open No. 2013-138689 discloses a bush cutter comprising a handle provided in an intermediate position of the main pole. The handle has a grip to be gripped by the user. A driving switch, a speed regulating switch and a protective switch are provided in positions operable by the user who holds the grip, without letting the grip out of the user's hand.
French patent application FR 2 901 034 A1 discloses a control handle for mobile construction machines and agriculture. It comprises a handle portion, at the upper end of which a housing for switch units is provided, and a hand rest, wherein the hand rest is clamped to the handle shank and is detachable. The hand rest is moveable relative to the housing along the handle shank.

### DISCLOSURE OF INVENTION

### PROBLEM TO BE SOLVED BY INVENTION

As the brush cutter, there are relatively small-sized and relatively large-sized brush cutters. The small-sized brush cutters are used for cutting weeds growing in fields. An operator mainly performs the operation of moving the cutting blade rightward and leftward so as to cut weeds.

The large-sized brush cutters are used for cutting plants in forests. Normally, a professional operator performs the work. The operator performs a vertical operation, that is, the operation of moving up and down the cutting blade as well as the operation of moving the cutting blade rightward and leftward.

Conventional grips are designed regardless of whether a work machine, to which the grip is applied, has a small size or a large size. It cannot be, therefore, said that the operability in moving up and down the cutting blade is sufficiently taken into consideration. The problem is not limited to the brush cutter, and other work machines also have a similar problem.

An object of the present invention is to provide a portable work machine having a handle and a grip that is gripped by an operator with his/her hand so as to operate the work machine, the grip capable of improving the operability of vertical movement without deteriorating the operability of rightward and leftward movement, and a portable work machine in the form of a brush cutter.

### MEANS FOR SOLVING THE PROBLEM

According to the present invention, the above technical object is achieved by providing
a portable work machine comprising a handle and a grip that is to be operated by an operator with a hand,
wherein the grip is fittable to an erected end portion of the handle extending diagonally outward and upward, and the grip includes a grip section that extends vertically so as to be gripped by the operator with a hand, and an enlarged head that is located on an upper end of the grip section,
wherein the enlarged head includes a forward enlarged portion that extends forward, and an outward enlarged portion that extends outward and has a lower surface with which a forefinger of the hand gripping the grip section can be engaged, and
the lower surface of the outward enlarged portion is composed of an inclined surface having an elevation angle with respect to a perpendicular to an axial line of the grip and when viewed from the rear side, the elevation angle being about 10° to 40° toward an outer side.
The above technical object is particularly achieved by providing
a brush cutter comprising a right grip and a left grip, the brush cutter further comprising:
   a power source;
   a cutting blade that is located at a position apart from the power source; and
   an operation rod that surrounds a power transmission shaft transmitting a rotational drive force of the power source to the cutting blade, wherein
   the handle extends rightward and leftward from the operation rod,
   the right grip is fitted to a right end portion of the handle, and the left grip is fitted to a left end portion of the handle, wherein the grip section of the right grip is grippable by the operator with a right hand and the grip section of the left grip is grippable by the operator with a left hand,
   the right grip comprises a throttle trigger that is arranged on a front surface of the grip section and is operated by the operator to control an output of the power source,
   the lower surface of the outward enlarged portion of the right grip is composed of an inclined surface having an elevation angle toward a front side, and
   the lower surface of the outward enlarged portion of the left grip is composed of an inclined surface having an elevation angle toward a front side.

According to a further aspect of the present invention, the above technical object is achieved by providing
a brush cutter comprising:
a power source;
a cutting blade that is located at a position apart from the power source;
an operation rod that surrounds a power transmission shaft transmitting a rotational drive force of the power source to the cutting blade; and
a handle that extends rightward and leftward from the operation rod,
further comprising a right grip that is fitted and screwed to a right end portion of the handle, and
a left grip that is fitted and screwed to a left end portion of the handle,
wherein the right grip includes a grip section that is gripped by an operator with a right hand, an enlarged head that is located on an upper end of the grip section, and a throttle trigger that is arranged on a front surface of the grip section and is operated by the operator to control an output of the power source,
the enlarged head of the right grip includes a forward enlarged portion that extends forward, and an outward enlarged portion that extends rightward and has a lower surface with which a forefinger of the right hand gripping the grip section can be engaged,
the lower surface of the outward enlarged portion is composed of an inclined surface having an elevation angle toward a front side, and
a rear portion of an upper surface of the enlarged head is composed of an inclined surface inclined backward and downward, and the operator is capable of placing a thumb of the hand gripping the grip section on the inclined rear portion of the upper surface and applying a force to the thumb,
wherein the left grip includes a grip section that is gripped by the operator with a left hand, and an enlarged head that is located on an upper end of the grip section,
the enlarged head of the left grip includes a forward enlarged portion that extends forward, and an outward enlarged portion that extends leftward and has a lower surface with which a forefinger of the left hand gripping the grip section can be engaged,
the lower surface of the outward enlarged portion is composed of an inclined surface having an elevation angle toward a front side, and
a rear portion of an upper surface of the enlarged head is composed of an inclined surface inclined backward and downward, and the operator is capable of placing a thumb of the hand gripping the grip section on the inclined rear portion of the upper surface and applying a force to the thumb.

That is, according to the present invention, the forefinger of the hand gripping the grip can be used for the operation of moving up and down a distal end portion of the work machine (for example, the cutting blade in a case of the brush cutter, and an air outlet tube in a case of a power blower). Accordingly, for example, when the present invention is applied to the brush cutter, the operability of vertical movement of the cutting blade can be improved without deteriorating the operability of rightward and leftward movement of the cutting blade.

Other objects, operations and advantages of the present invention will become apparent from the following detailed description of the preferred embodiment of the present invention.

### BRIEF DESCRIPTION OF THE DRAWINGS

FIG. 1 shows a perspective diagram of a brush cutter of an embodiment as viewed from the forward left.
FIG. 2 shows a left side diagram of the brush cutter shown in FIG. 1.
FIG. 3 shows a right side diagram of the brush cutter shown in FIG. 1.
FIG. 4 shows a front diagram of the brush cutter shown in FIG. 1.
FIG. 5 shows a rear diagram of the brush cutter shown in FIG. 1.
FIG. 6 shows a perspective diagram of a right grip of the brush cutter in FIG. 1 as viewed from the diagonally backward right.
FIG. 7 shows a right side diagram of the right grip shown in FIG. 6.
FIG. 8 shows a left side diagram of the right grip shown in FIG. 6.
FIG. 9 shows a rear diagram of the right grip shown in FIG. 6.
FIG. 10 shows a perspective diagram of a left grip of the brush cutter in FIG. 1 as viewed from the diagonally backward right.
FIG. 11 shows a left side diagram of the left grip shown in FIG. 10.
FIG. 12 shows a right side diagram of the left grip shown in FIG. 10.
FIG. 13 shows a front diagram of the left grip shown in FIG. 10.
FIG. 14 shows a rear diagram of the left grip shown in FIG. 10.
FIG. 15 shows a bottom diagram of the left grip shown in FIG. 10.
FIG. 16 shows a perspective diagram of a left grip of a modification as viewed from the diagonally backward right.
FIG. 17 shows a left side diagram of the left grip shown in FIG. 16.
FIG. 18 shows a right side diagram of the left grip shown in FIG. 16.
FIG. 19 shows a rear diagram of the left grip shown in FIG. 16.

### MODE FOR CARRYING OUT THE INVENTION

### [Embodiment]

In the following, a specific embodiment in which the present invention is applied to a brush cutter is described based on the accompanying drawings. Herein, terms such as horizontal, vertical, left, right, upper, lower and other such terms are to be understood as indicating the respective orientation or direction when the work machine is in its normal operating state, as seen from the operator's perspective.

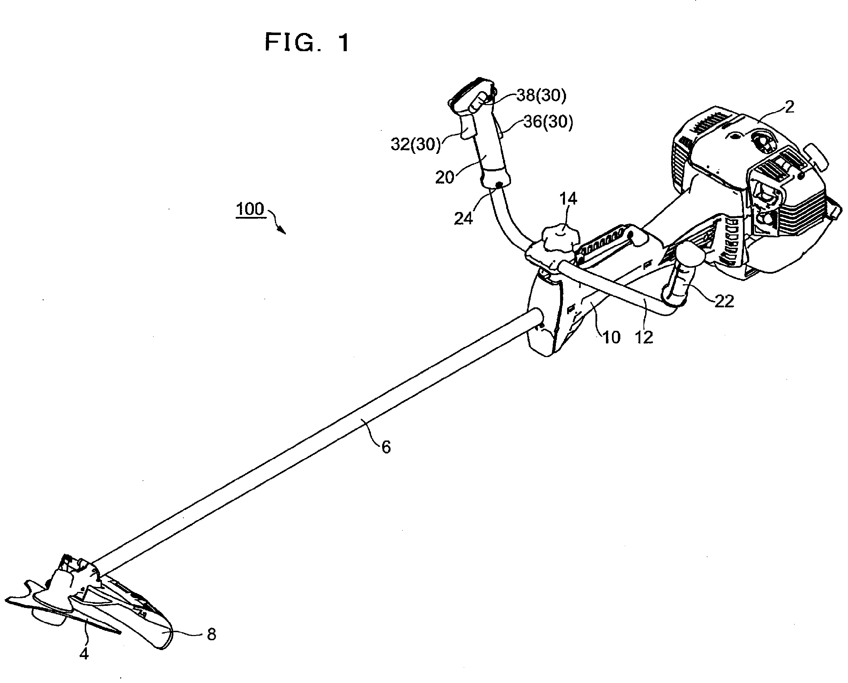

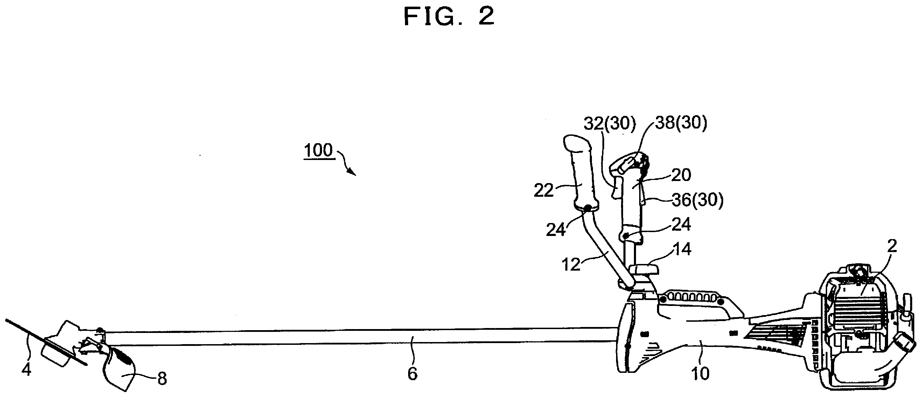

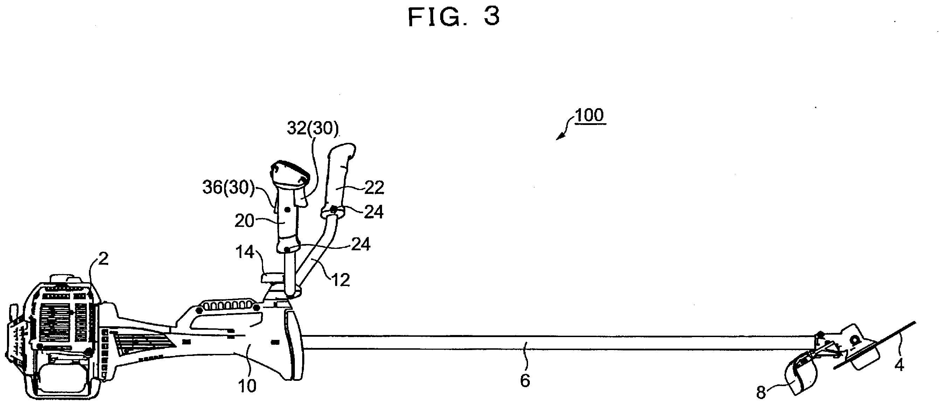

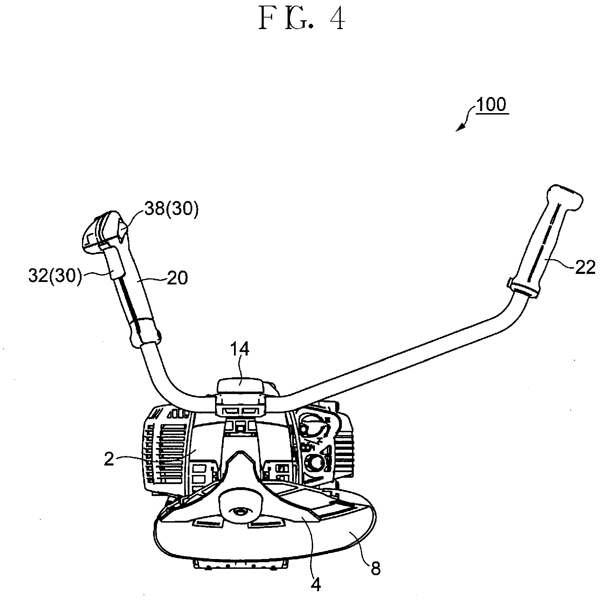

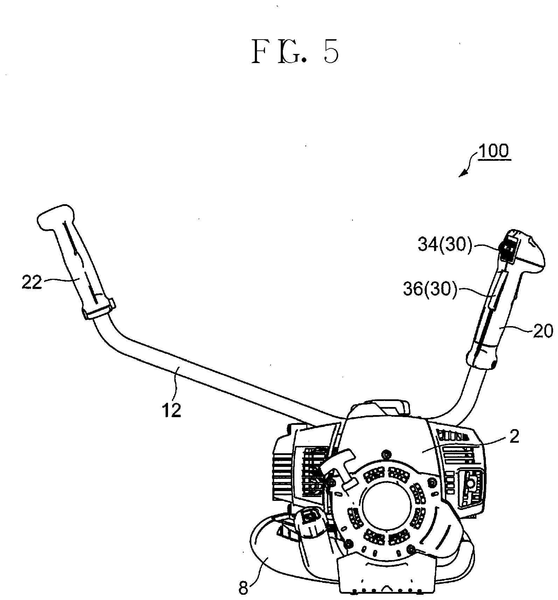

FIGS. 1 to 5 show a handheld-type brush cutter 100 of the embodiment. FIG. 1 shows a perspective diagram of the brush cutter 100 as viewed from the forward left. FIG. 2 shows a left side diagram. FIG. 3 shows a right side diagram. FIG. 4 shows a front diagram. FIG. 5 shows a rear diagram.

By reference to FIGS. 1 to 5, the brush cutter 100 is a handheld-type brush cutter including a power source 2 at a rear end portion thereof. As a modification, the brush cutter 100 may be of a backpack type. The power source 2 is composed of an internal combustion engine, more specifically a two-stroke air-cooled engine. The brush cutter 100 shown in the drawings is classified into a large-size type. The engine is of 50 cc displacement. Of course, the engine may be of any displacement. The engine displacement may be larger than 50 cc, or may be relatively small, e.g., 40 cc.

The handheld-type brush cutter 100 includes a cutting blade 4 at a front end portion thereof. The cutting blade 4 and the power source 2 are connected via a power transmission shaft (not shown in the drawings). The power transmission shaft is surrounded by an doperation rod 6. In the drawings, reference numeral 8 denotes a protective cover.

A cover member 10 arranged next to the power source 2 is disposed so as to surround a clutch (not shown in the drawings) that is interposed between the power source 2 and the power transmission shaft. A handle 12 is positioned at a front end of the cover member 10. The cover member 10 has an anti-vibration structure. Vibration transmission from the power source 2 to the operation rod 6 and the handle 12 is suppressed by the anti-vibration structure. As a modification, the handle 12 may be directly positioned on the operation rod 6.

The handle 12 extends in a direction to cross the cover member 10, and has a U shape as viewed in front view. That is, the handle 12 includes erected right and left end portions. To be more specific, the end portions of the handle 12 respectively extend diagonally outward and upward. An operation knob 14 for fixing the position of the handle 12 is provided at a distal end portion of the cover member 10. By rotating the operation knob 14 to loosen the handle 12, an attachment angle of the handle 12 can be displaced rightward or leftward. By rotating the operation knob 14 in a direction to tighten the operation knob 14, the handle 12 can be fixed.

A right grip 20 and a left grip 22 are respectively mounted to the diagonally-erected right and left end portions of the handle 12. The right and left grips 20 and 22 are resin moldings. When the right and left grips 20 and 22 are inserted onto the end portions of the handle 12, the right and left grips 20 and 22 can freely rotate on the axis. After inserting the right and left grips 20 and 22 onto the end portions of the handle 12, and then positioning rotational positions of the right and left grips 20 and 22, screws 24 are tightened. Accordingly, tips of the screws 24 bite into the handle 12 to fix the right and left grips 20 and 22 to the handle 12.

The right grip 20 located at a position apart rightward from the operation rod 6 includes an operation section 30 that is operated by an operator with his/her right hand. The operation section 30 includes a main throttle trigger 32, an engine ON/OFF switch 34, a throttle lockout 36, and a throttle latch 38. The main throttle trigger 32 is arranged on a front surface of the right grip 20. Engine power can be controlled by operating the main throttle trigger 32.

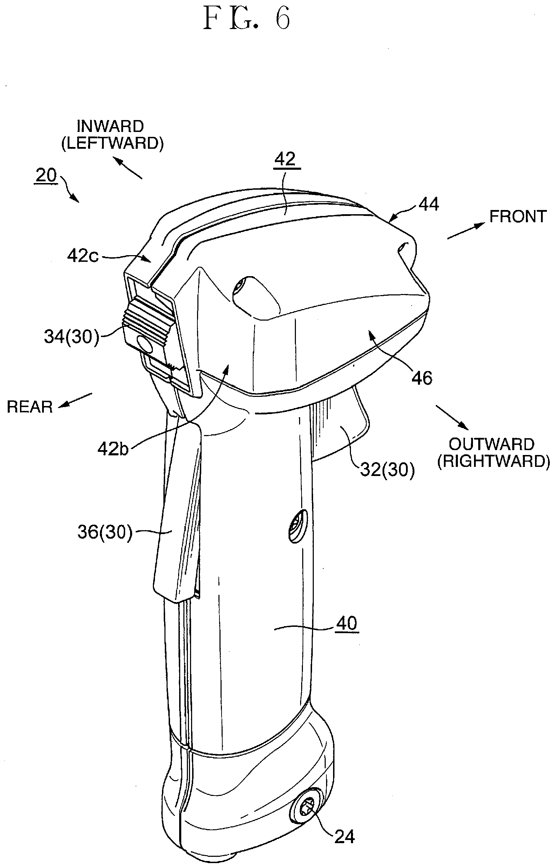

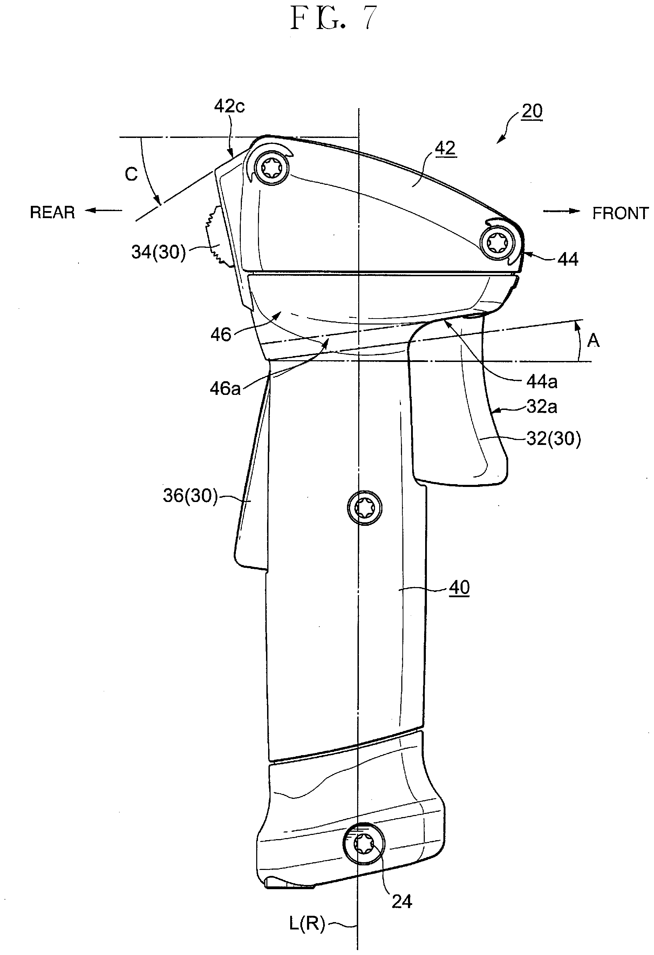

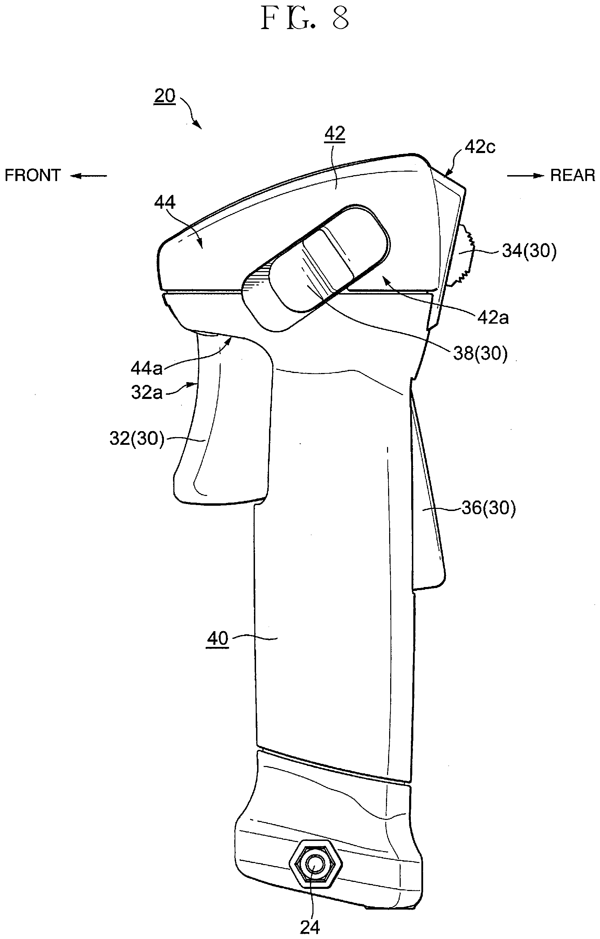

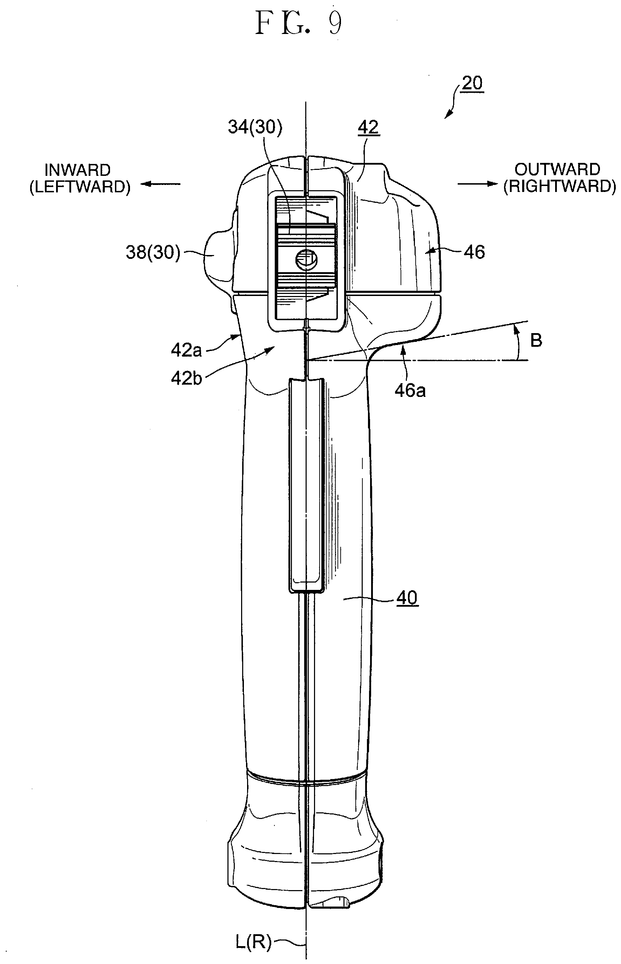

FIGS. 6 to 9 show the right grip 20. FIG. 6 shows a perspective diagram of the right grip 20 as viewed from the diagonally backward right. FIG. 7 shows a right side diagram. FIG. 8 shows a left side diagram. FIG. 9 shows a rear diagram. The right grip 20 includes a grip section 40 that extends in a vertical direction. The grip section 40 of the right grip 20 has a substantially elliptical shape in cross section with a long axis extending in a front and rear direction. The right grip 20 also includes an enlarged head 42 that is located on an upper end of the grip section 40.

The shape of the enlarged head 42 is described below. The enlarged head 42 includes a forward enlarged portion 44 (FIG. 7) that extends largely forward, and an outward enlarged portion 46 (FIG. 9) that extends rightward (outward). In other words, as is best understood from FIG. 9, the enlarged head 42 does not extend backward and inward (leftward). An inner surface 42a and a rear surface 42b (FIG. 9) of the enlarged head 42 are not shaped to largely project from corresponding surfaces of the grip section 40 although slightly bulging out therefrom.

By reference to FIG. 7 showing the right side surface of the right grip 20, in the outward enlarged portion 46 extending in the right direction of the enlarged head 42 of the right grip 20, a lower surface 46a thereof is composed of an inclined surface whose height is gradually elevated toward the front side. Accordingly, the operation of moving up and down the cutting blade 4 is facilitated by engagement between the inclined lower surface 46a of the outward enlarged portion 46 and the forefinger of the right hand obtained by causing the forefinger to abut against the inclined lower surface 46a.

That is, in the enlarged head 42 of the right grip 20, the lower surface 46a of the outward enlarged portion 46 enlarged in the right direction so as to cover the forefinger of the right hand gripping the right grip 20 is composed of the inclined surface having an elevation angle A (FIG. 7) toward the front side. The reason why the lower surface 46a of the outward enlarged portion 46 is inclined at the elevation angle A is to enable the handle 12 to be operated in a state in which the forefinger of the right hand is placed along and in abutment against a substantially entire region in the front and rear direction of the lower surface 46a. The lower surface 46a is also composed of an inclined surface having an elevation angle B (FIG. 9) toward the outer side, i.e., the right side. The elevation angle A toward the front side is preferably about 5° to 30°, more preferably about 10° to 20°, and most preferably about 15°. The elevation angle B toward the right side (the outer side) is preferably about 10° to 40°, more preferably about 20° to 30°, and most preferably about 27°.

By reference to FIG. 7, a rear portion 42c in an upper surface of the enlarged head 42 of the right grip 20 is composed of a relatively flat surface inclined diagonally downward toward the rear side. That is, the rear portion 42c is composed of an inclined surface having a depression angle C (FIG. 7) toward the rear side with respect to a perpendicular to an axial line L (R) of the right grip 20. The depression angle C toward the rear side is preferably about 10° to 40°, and more preferably about 25° to 35°. As to the elevation angles A and B and the depression angle C described above, each of the inclined surfaces having the elevation angles A and B and the depression angle C is composed of a plurality of inclined surfaces having different angles, or a curved inclined surface. Thus, please understand that various actual measurement values are obtained depending on a measurement point. Therefore, it is to be understood that the above numerical values of the elevation angles A and B and the depression angle C are representative numerical values.

In accordance with the right grip 20 having the above configuration, the cutting blade 4 can be moved up and down by using the forefinger and the thumb of the right hand gripping the grip section 40 of the right grip 20. For example, when the cutting blade 4 is moved up, the operation of moving the right hand can be performed with the first and second joints of the forefinger of the right hand being in abutment against a lower surface 44a of the forward enlarged portion 44 and the lower surface 46a of the outward enlarged portion 46 of the enlarged head 42.

Since an operator grips the grip more strongly than usual at the time of moving up and down the cutting blade 4, base portions of the thumb and the forefinger of the right hand of the operator strongly gripping the grip section 40 of the right grip 20, more specifically, a side surface of the thumb on the forefinger side is normally abraded. This problem can be avoided by the above shape of the right grip 20. That is, the enlarged head 42 of the right grip 20 does not project backward and leftward (inward). Because of the shape, local application of a load to the base of the thumb can be suppressed even when the operator keeps strongly gripping the grip. Also, the thumb can be moved relatively freely. Therefore, the problem that the base portions of the thumb and the forefinger of the right hand, more specifically, the side surface of the thumb on the forefinger side is abraded at the time of moving up and down the cutting blade 4 can be avoided by the shape of the right grip 20.

As described above, the shape of the right grip 20 not only enables the free movement of the thumb, but also enables the thumb to be used for moving up and down the cutting blade 4, particularly, for moving down the cutting blade 4. As described above, the rear portion 42c in the upper surface of the enlarged head 42 of the right grip 20 is composed of the relatively flat surface inclined diagonally downward toward the rear side. When the cutting blade 4 is moved down, the operator can place the thumb on the inclined rear portion 42c, and apply a force to the thumb.

As is best understood from FIG. 7, in the main throttle trigger 32 to be operated with the forefinger of the right hand gripping the right grip 20, an operation receiving surface 32a is composed of a smooth surface with no irregularities. Accordingly, a surface used for operating the main throttle trigger 32 with the forefinger can be enlarged. In other words, in the case that a portion operated with the forefinger is composed of a recess portion so as to limit the operated portion of the main throttle trigger 32, the operator comes to feel pain in the forefinger when the operator repetitively operates the main throttle trigger 32 with the forefinger. On the other hand, in the right grip 20 of the embodiment, the operation receiving surface 32a of the main throttle trigger 32 is composed of the smooth surface with no irregularities, and therefore, the operator can move the forefinger to another portion at proper timings while the operator repetitively operates the main throttle trigger 32. Accordingly, the pain in the forefinger can be suppressed.

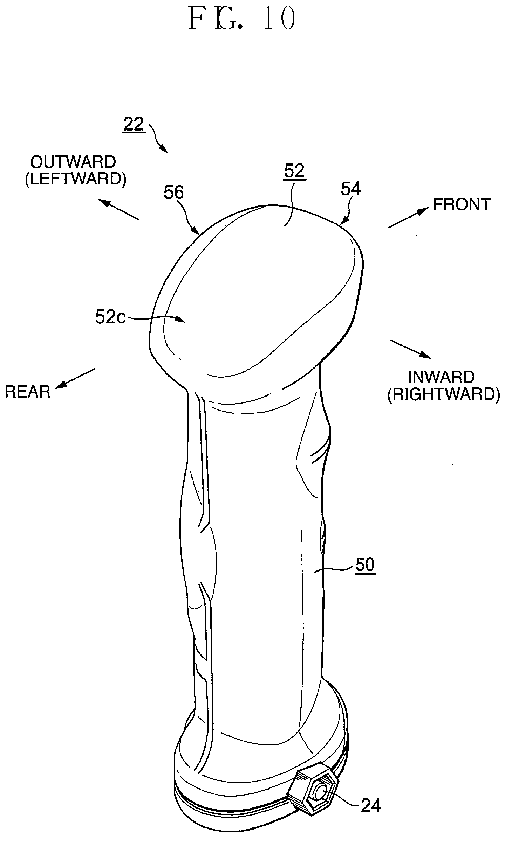

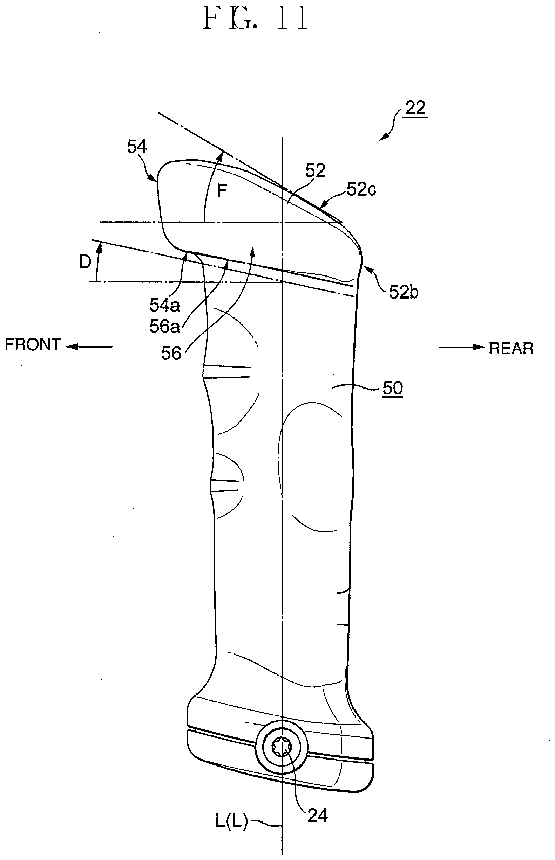

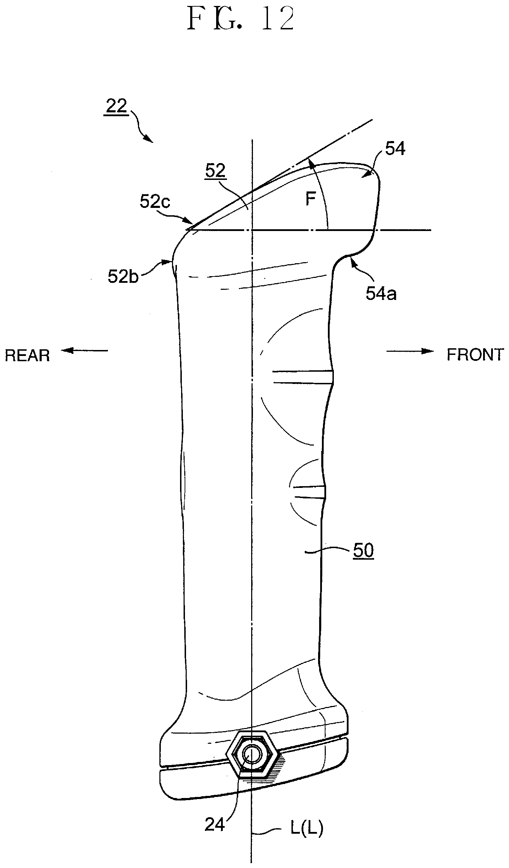

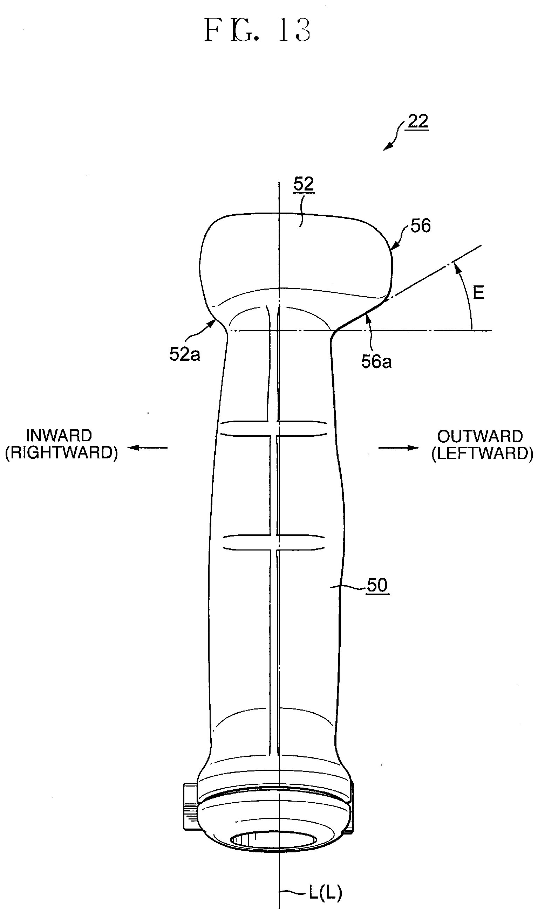

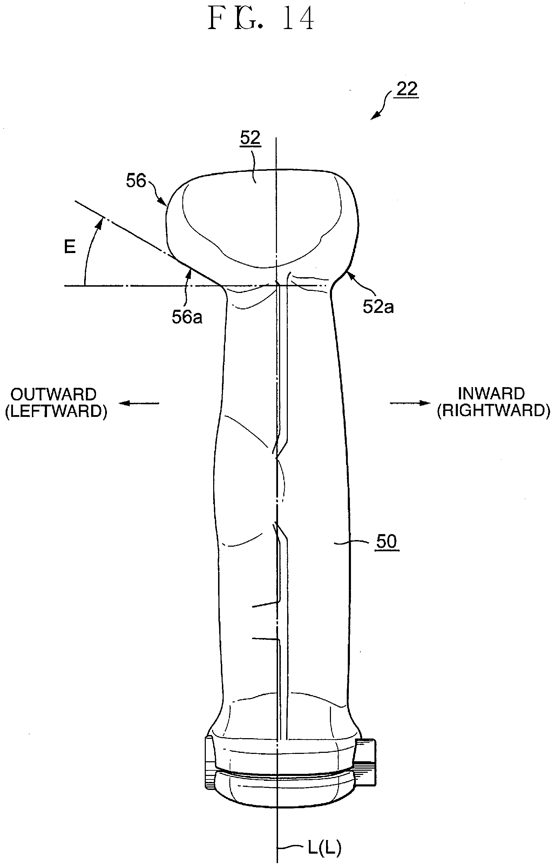

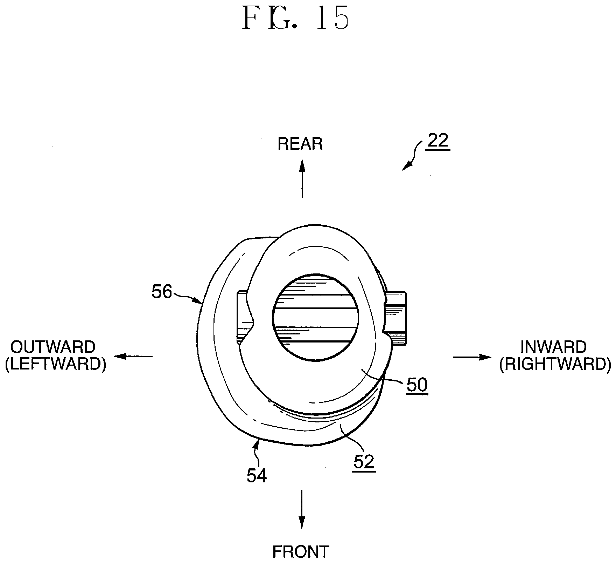

FIGS. 10 to 15 show the left grip 22. FIG. 10 shows a perspective diagram of the left grip 22 as viewed from the diagonally backward right. FIG. 11 shows a left side diagram. FIG. 12 shows a right side diagram. FIG. 13 shows a front diagram of the left grip 22. FIG. 14 shows a rear diagram. FIG. 15 shows a bottom diagram of the left grip 22.

Although the right grip 20 described above includes the operation section 30, the left grip 22 described below only serves to be gripped with the left hand of an operator. A grip section 50 of the left grip 22 that is located at a position apart leftward from the operation rod 6 has a substantially elliptical shape in cross section with a long axis extending in the front and rear direction. The left grip 22 also includes an enlarged head 52 that is located on an upper end of the grip section 50.

The shape of the enlarged head 52 of the left grip 22 is described below. The enlarged head 52 has the same basic concept as the enlarged head 42 of the right grip 20 described above. That is, the enlarged head 52 of the left grip 22 includes a forward enlarged portion 54 (FIG. 12) that extends largely forward, and an outward enlarged portion 56 (FIG. 14) that extends outward. In other words, as is best understood from FIG. 15, the enlarged head 52 of the left grip 22 does not extend backward and inward (rightward). An inner surface 52a (FIGS. 13 and 14) and a rear surface 52b (FIGS. 11 and 12) of the enlarged head 52 are substantially flush with corresponding surfaces of the grip section 50, and do not project therefrom.

By reference to FIG. 11 showing the left side surface of the left grip 22, in the outward enlarged portion 56 extending in the left direction of the enlarged head 52 of the left grip 22, a lower surface 56a thereof is composed of an inclined surface whose height is gradually elevated toward the front side.

That is, in the enlarged head 52 of the left grip 22, the lower surface 56a of the outward enlarged portion 56 enlarged in the left direction is composed of the inclined surface having an elevation angle D (FIG. 11) toward the front side. The reason why the lower surface 56a of the outward enlarged portion 56 is inclined at the elevation angle D is to enable the handle 12 to be operated in a state in which the forefinger of the left hand is placed along and in abutment against a substantially entire region in the front and rear direction of the lower surface 56a. The lower surface 56a is also composed of an inclined surface having an elevation angle E (FIG. 13) toward the outer side, i.e., the left side. The elevation angle D of the left grip 22 toward the front side is preferably about 5° to 30°, more preferably about 10° to 20°, and most preferably about 15° similarly to the above right grip 20. The elevation angle E of the left grip 22 toward the left side (the outer side) is preferably about 10° to 40°, more preferably about 20° to 30°, and most preferably about 27° similarly to the above right grip 20.

By reference to FIGS. 11 and 12, a rear portion 52c in an upper surface of the enlarged head 52 of the left grip 22 is composed of a relatively flat surface inclined diagonally downward toward the rear side. That is, the rear portion 52c is composed of an inclined surface having a depression angle F (FIGS. 11 and 12) toward the rear side with respect to a perpendicular to an axial line L (L) of the left grip 22. The depression angle F is preferably about 10° to 50°, and more preferably about 25° to 35°.

In accordance with the left grip 22 having the above configuration, the cutting blade 4 can be moved up and down by using the forefinger and the thumb of the left hand gripping the grip section 50 similarly to the above right grip 20. For example, when the cutting blade 4 is moved up, the operation of moving the left hand can be performed with the first and second joints of the forefinger of the left hand being in abutment against a lower surface 54a of the forward enlarged portion 54 and the inclined lower surface 56a of the outward enlarged portion 56 of the enlarged head 52.

A problem that base portions of the thumb and the forefinger of the left hand strongly gripping the grip section 50 of the left grip 22, more specifically, a side surface of the thumb on the forefinger side is abraded at the time of moving up and down the cutting blade 4 can be avoided by the shape of the left grip 22. That is, the enlarged head 52 of the left grip 22 does not project backward and rightward (inward). Because of the shape, the thumb can be moved relatively freely. Therefore, the phenomena that the base portions of the thumb and the forefinger of the left hand, more specifically, the side surface of the thumb on the forefinger side is abraded at the time of moving up and down the cutting blade 4 can be avoided by the shape of the left grip 22.

As described above, the shape of the left grip 22 not only enables the free movement of the thumb, but also enables the thumb to be used for moving up and down the cutting blade 4, particularly, for moving down the cutting blade 4. As described above, the rear portion 52c in the upper surface of the enlarged head 52 of the left grip 22 is composed of the relatively flat surface inclined diagonally downward toward the rear side. By placing the thumb on the inclined rear portion 52c, and applying a force to the thumb, the force of the thumb can be used for moving down the cutting blade 4. By using the force of the thumb, a force required for directing the cutting blade 4 downward can be reduced, and a strain on an operator can be also decreased.

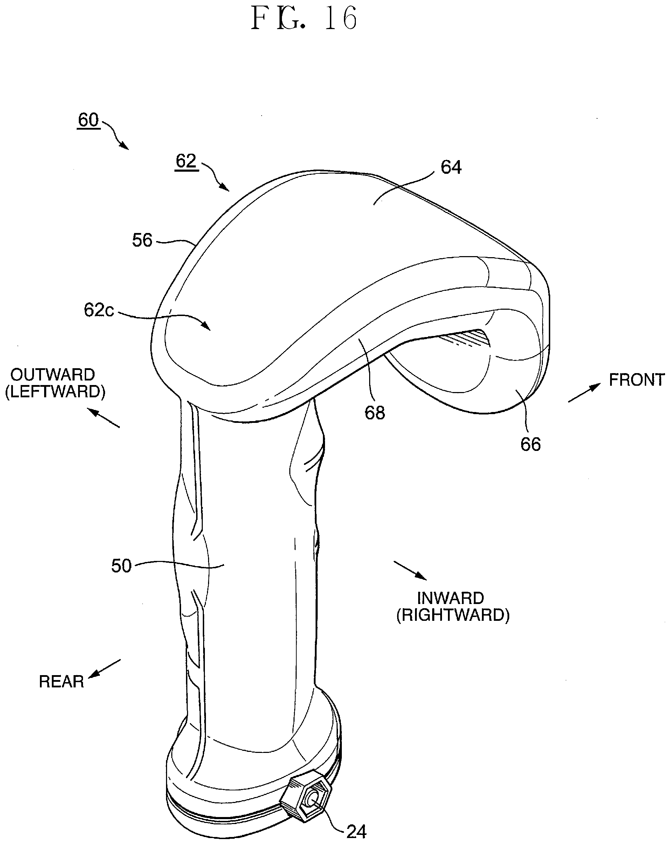

### Modification of the left grip (FIGS. 16 to 19):

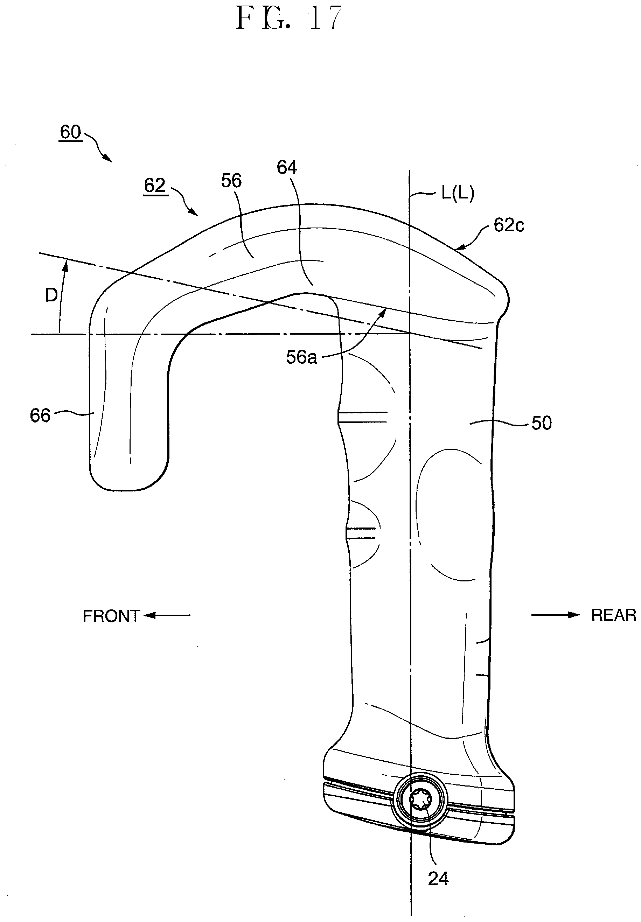

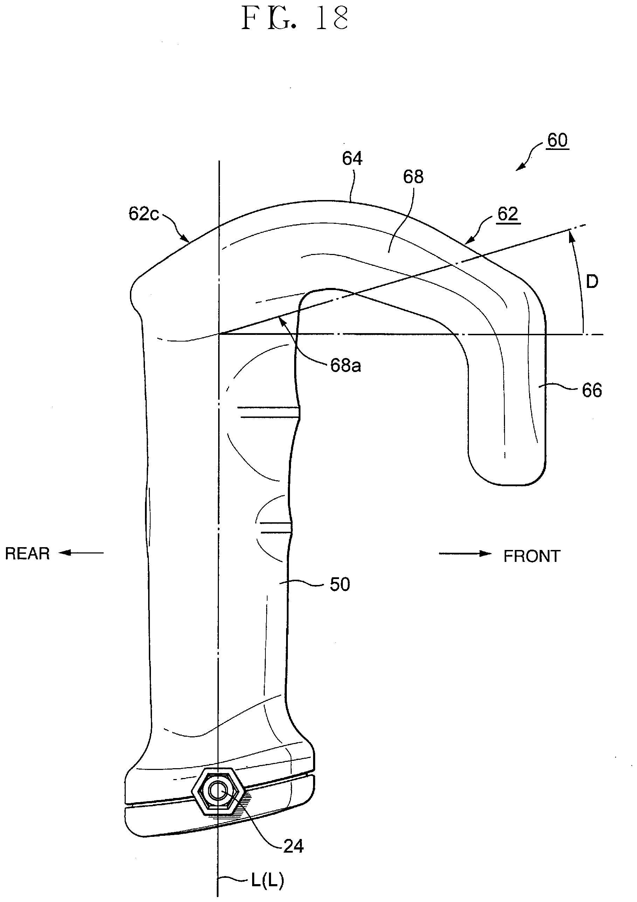

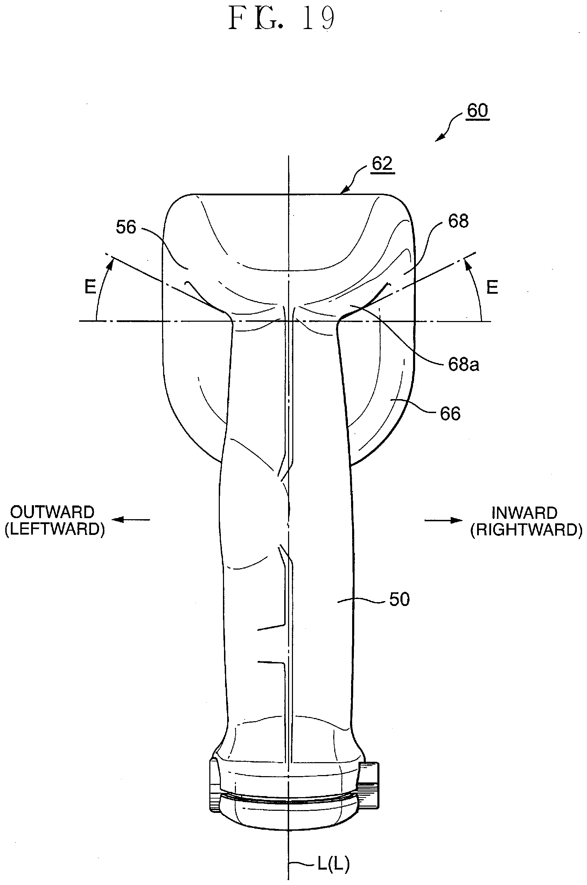

FIGS. 16 to 19 show a left grip 60 according to a modification. FIG. 16 shows a perspective diagram of the left grip 60 as viewed from the diagonally backward right. FIG. 17 shows a left side diagram. FIG. 18 shows a right side diagram. FIG. 19 shows a rear diagram.

In the description of the left grip 60 of the modification, the same elements as those of the above left grip 22 described by reference to FIGS. 10 to 15 are assigned the same reference numerals, and the description thereof is omitted. A characteristic portion of the left grip 60 of the modification is described below.

The left grip 60 of the modification has the same configuration as the left grip 22 described above in that an enlarged head 62 thereof includes a forward enlarged portion 64 and the outward enlarged portion 56. The left grip 60 of the modification also has the same configuration as the left grip 22 described above in that a rear portion 62c of the enlarged head 62 is composed of an inclined surface.

However, in the left grip 60 of the modification, the forward enlarged portion 64 has a different shape from the forward enlarged portion 54 of the left grip 22 described above. As is understood from FIGS. 16 to 18, the forward enlarged portion 64 of the left grip 60 of the modification extends largely forward. That is, the forward enlarged portion 64 of the left grip 60 extends farther forward than the forward enlarged portion 54 of the left grip 22.

The left grip 60 of the modification further includes a hanging portion 66 that extends downward from a front end of the forward enlarged portion 64. The hanging portion 66 extends to a longitudinal intermediate portion of the grip section 50. According to the modification, the hanging portion 66 serves as a protective wall for protecting the left hand gripping the left grip 60. That is, the hanging portion 66 can prevent a tree branch or the like from striking against the left hand during a work.

As is best understood from FIGS. 17 and 18, in the left grip 60 of the modification, the thumb of the left hand is placed on the inclined rear portion 62c of the enlarged head 62 similarly to the left grip 22 described above. The cutting blade 4 can be thereby moved up and down by using the forefinger and the thumb of the left hand similarly to the left grip 22 described above.

In the left grip 60 of the modification, the enlarged head 62 also includes an inward enlarged portion 68 that is enlarged rightward (inward) (see FIG. 19). The inward enlarged portion 68 preferably has substantially the same shape as the outward enlarged portion 56 described above. A lower surface 68a of the inward enlarged portion 68 enlarged rightward is composed of an inclined surface having the elevation angle D toward the front side (see FIG. 18). The lower surface 68a also has the elevation angle E toward the inner side, i.e., the right side.

Since the left grip 60 of the modification includes the inward enlarged portion 68 in addition to the outward enlarged portion 56, the inward enlarged portion 68 also can serve as a protective wall for protecting the left hand. Accordingly, the left grip 60 of the modification can protect the left hand gripping the left grip 60 from three directions of the front side, the left side, and the right side. That is, the hanging portion 66, the outward enlarged portion 56, and the inward enlarged portion 68 can prevent a tree branch or the like from striking against the left hand during a work.

As is understood from the above description, in accordance with the brush cutter 100 of the embodiment, the operability of not only the operation of moving the cutting blade 4 rightward and leftward, but also the operation of moving up and down the cutting blade 4 can be improved by the shapes of the right and left grips 20, 22, and 60.

The present invention can be applied to handheld-type and backpack-type portable work machines. Typical examples thereof include a brush cutter and a power blower. The present invention can be favorably applied to both a handheld-type brush cutter and a backpack-type brush cutter. The present invention can be favorably applied to a backpack-type power blower.

100 Brush Cutter
2 Power Source
4 Cutting Blade
6 Operation rod
12 Handle
20 Right Grip
22 Left Grip
24 Screw for Fixing Grip
40 Grip Section of Right Grip
42 Enlarged Head of Right Grip
42c Rear Portion (Inclined Surface) of Upper Surface of Enlarged Head of Right Grip
44 Forward Enlarged Portion of Enlarged Head
44a Lower Surface of Forward Enlarged Portion
46 Outward Enlarged Portion of Enlarged Head
46a Lower Surface of Outward Enlarged Portion
50 Grip Section of Left Grip
52 Enlarged Head of Left Grip
52c Rear Portion of Upper Surface of Enlarged Head of Left Grip
54 Forward Enlarged Portion of Left Grip
54a Lower Surface of Forward Enlarged Portion
56 Outward Enlarged Portion of Left Grip
56a Lower Surface of Outward Enlarged Portion

## Claims

1. A portable work machine (100) comprising a handle (12) and a grip (20, 22) that is to be operated by an operator with a hand,
wherein the grip is fittable to an erected end portion of the handle, and the grip includes a grip section (40, 50) that extends vertically so as to be gripped by the operator with a hand, and an enlarged head (42, 52) that is located on an upper end of the grip section (40, 50),
wherein the enlarged head includes a forward enlarged portion (44, 54) that extends forward, and an outward enlarged portion (46, 56) that extends outward and has a lower surface (46a, 56a) with which a forefinger of the hand gripping the grip section can be engaged, and
**characterized in that** the handle extends diagonally outward and upward, and the lower surface (46a, 56a) of the outward enlarged portion (46, 56) is composed of an inclined surface having an elevation angle (B, E) with respect to a perpendicular to an axial line (L(L), L(R)) of the grip (20, 22) and when viewed from the rear side, the elevation angle (B, E) being 10° to 40° toward an outer side.

2. The portable work machine of claim 1, wherein the lower surface (46a, 56a) of the outward enlarged portion (46, 56) is composed of an inclined surface having an elevation angle (A, D) with respect to the perpendicular to the axial line (L(L), L(R)) of the grip (20, 22) and when viewed from the outward side, the elevation angle (B, E) being toward a front side.

3. The portable work machine of claim 1 or 2, wherein a rear portion (42c, 52c) of an upper surface of the enlarged head (42, 52) is composed of an inclined surface inclined backward and downward and shaped for receiving a thumb of the hand gripping the grip section on the inclined rear portion of the upper surface.

4. The portable work machine of any one of the preceding claims, wherein the elevation angle (B, E) toward the outer side of the lower surface (46a, 56a) of the outward enlarged portion is 20° to 30°.

5. The portable work machine of claim 2 or any one of claims 3-4 referring back to claim 2, wherein the elevation angle (A, D) with respect to the perpendicular to the axial line (L(L), L(R)) of the grip (20, 22) and toward the front side of the lower surface (46a, 56a) of the outward enlarged portion is 5° to 30°.

6. The portable work machine of claim 2 or any one of claims 3-5 referring back to claim 2, wherein the elevation angle (A) toward the front side of the lower surface (46a, 56a) of the outward enlarged portion is 10° to 20°.

7. The portable work machine of any one of the preceding claims, wherein a throttle trigger (32) is arranged on a front surface of the grip, and
an operation surface of the throttle trigger is composed of a smooth surface.

8. The portable work machine of any one of claims 1 to 7, wherein the portable work machine is or a backpack power blower.

9. The portable work machine of any one of claims 1 to 7, wherein the portable work machine is a brush cutter (100).

10. The portable work machine of claim 9 comprising a right grip (20) and a left grip (22), the portable work machine further comprising:
a power source (2);
a cutting blade (4) that is located at a position apart from the power source; and
an operation rod (6) that surrounds a power transmission shaft transmitting a rotational drive force of the power source to the cutting blade, wherein
the handle (12) extends rightward and leftward from the operation rod,
the right grip (20) is fitted to a right end portion of the handle, and the left grip (22) is fitted to a left end portion of the handle, wherein the grip section of the right grip is grippable by the operator with a right hand and the grip section of the left grip is grippable by the operator with a left hand,
the right grip (20) comprises a throttle trigger that is arranged on a front surface of the grip section and is operated by the operator to control an output of the power source,
the lower surface (46a) of the outward enlarged portion of the right grip (20) is
composed of an inclined surface having an elevation angle toward a front side, and
the lower surface (56a) of the outward enlarged portion of the left grip (22) is composed of an inclined surface having an elevation angle toward a front side.

11. Use of the portable work machine (100) according to any one of claims 1 to 10, whereby the grip section (40, 50) is gripped by the operator with the hand, such that the lower surface (46a, 56a) of the outward enlarged portion (46, 56) is engaged with a forefinger of the hand gripping the grip section.

## Patentansprüche

1. Tragbare Arbeitsmaschine (100) mit einem Griff (12) und einem Haltegriff (20, 22), der von einer Bedienperson mit einer Hand zu betätigen ist,
wobei der Haltegriff an einem aufgerichteten Endabschnitt des Griffs anbringbar ist und der Haltegriff einen Haltegriffabschnitt (40, 50), der sich vertikal erstreckt, um von der Bedienperson mit einer Hand gefasst zu werden, und einen vergrößerten Kopf (42, 52) aufweist, der sich an einem oberen Ende des Haltegriffabschnitts (40, 50) befindet,
wobei der vergrößerte Kopf einen nach vorn vergrößerten Abschnitt (44, 54), der sich nach vorn erstreckt, und einen nach außen vergrößerten Abschnitt (46, 56) aufweist, der sich nach außen erstreckt, und eine Unterseite (46a, 56a) hat, mit der ein Zeigefinger der den Haltegriffabschnitt fassenden Hand in Eingriff gebracht werden kann, und
**dadurch gekennzeichnet ist, dass** sich der Griff diagonal nach außen und oben erstreckt, und die Unterseite (46a, 56a) des nach außen vergrößerten Abschnitts (46, 56) aus einer geneigten Fläche mit einem Erhebungswinkel (B, E) in Bezug auf eine Senkrechte zu einer axialen Linie (L(L), L(R)) des Haltegriffs (20, 22) aufgebaut ist, und von der Rückseite aus gesehen, der Erhebungswinkel (B, E) 10° bis 40° zu einer Außenseite hin beträgt.

2. Tragbare Arbeitsmaschine nach Anspruch 1, wobei die Unterseite (46a, 56a) des nach außen vergrößerten Abschnitts (46, 56) aus einer geneigten Fläche mit einem Erhebungswinkel (A, D) in Bezug auf die Senkrechte zur axialen Linie (L(L), L(R)) des Haltegriffs (20, 22) aufgebaut ist, und von der nach außen führenden Seite aus gesehen, der Erhebungswinkel (B, E) zu einer Vorderseite hin gerichtet ist.

3. Tragbare Arbeitsmaschine nach Anspruch 1 oder 2, wobei ein hinterer Abschnitt (42c, 52c) einer Oberseite des vergrößerten Kopfs (42, 52) aus einer geneigten Fläche aufgebaut ist, die nach hinten und nach unten geneigt ist, um einen Daumen der den Haltegriffabschnitt festhaltenden Hand an dem geneigten hinteren Abschnitt der Oberseite aufzunehmen.

4. Tragbare Arbeitsmaschine nach einem der vorhergehenden Ansprüche, wobei der Erhebungswinkel (B, E) zur Außenseite der Unterseite (46a, 56a) des nach außen vergrößerten Abschnitts 20° bis 30° beträgt.

5. Tragbare Arbeitsmaschine nach Anspruch 2 oder einem der sich auf Anspruch 2 rückbeziehenden Ansprüche 3 - 4, wobei der Erhebungswinkel (A, D) in Bezug auf die Senkrechte zur axialen Linie (L(L), L(R)) des Haltegriffs (20, 22) und zur Vorderseite der Unterseite (46a, 56a) des nach außen vergrößerten Abschnitts 5° bis 30° beträgt.

6. Tragbare Arbeitsmaschine nach Anspruch 2 oder einem der sich auf Anspruch 2 rückbeziehenden Ansprüche 3 - 5, wobei der Erhebungswinkel (A) zur Vorderseite der Unterseite (46a, 56a) des nach außen vergrößerten Abschnitts 10° bis 20° beträgt.

7. Tragbare Arbeitsmaschine nach einem der vorhergehenden Ansprüche, wobei ein Gashebel (32) auf einer Vorderseite des Haltegriffs angeordnet ist, und
eine Betätigungsoberfläche des Gashebels aus einer glatten Oberfläche besteht.

8. Tragbare Arbeitsmaschine nach einem der Ansprüche 1 bis 7, wobei es sich bei der tragbaren Arbeitsmaschine um einen auf dem Rücken zu tragenden Leistungsbläser handelt.

9. Tragbare Arbeitsmaschine nach einem der Ansprüche 1 bis 7, wobei es sich bei der tragbaren Arbeitsmaschine um einen Freischneider (100) handelt.

10. Tragbare Arbeitsmaschine nach Anspruch 9, einen rechten Haltegriff (20) und einen linken Haltegriff (22) aufweisend, wobei die tragbare Arbeitsmaschine darüber hinaus aufweist:
eine Energiequelle (2);
ein Schneidemesser (4), das sich an einer von der Stromquelle entfernten Stelle befindet; und
eine Betätigungsstange (6), die eine Energieübertragungswelle umgibt, die eine Drehantriebskraft der Energiequelle an das Schneidemesser überträgt, wobei
sich der Griff (12) von der Betätigungsstange nach rechts und nach links erstreckt,
der rechte Haltegriff (20) an einem rechten Endabschnitt des Griffs angebracht ist, und der linke Haltegriff (22) an einem linken Endabschnitt des Griffs angebracht ist, wobei der Haltegriffabschnitt des rechten Haltegriffs von der Bedienperson mit der rechten Hand gefasst werden kann, und der Haltegriffabschnitt des linken Haltegriffs von der Bedienperson mit der linken Hand gefasst werden kann,
der rechte Haltegriff (20) einen Gashebel aufweist, der auf einer Vorderseite des Haltegriffabschnitts angeordnet ist und von der Bedienperson betätigt wird, um eine Leistung der Energiequelle zu steuern,
die Unterseite (46a) des nach außen vergrößerten Abschnitts des rechten Haltegriffs (20) aus einer geneigten Fläche mit einem Erhebungswinkel zu einer Vorderseite aufgebaut ist, und
die Unterseite (56a) des nach außen vergrößerten Abschnitts des linken Haltegriffs (22) aus einer geneigten Fläche mit einem Erhebungswinkel zu einer Vorderseite aufgebaut ist.

11. Verwendung der tragbaren Arbeitsmaschine (100) nach einem der Ansprüche 1 bis 10, wobei der Haltegriffabschnitt (40, 50) von der Bedienperson mit der Hand so gefasst wird, dass die Unterseite (46a, 56a) des nach außen vergrößerten Abschnitts (46, 56) mit einem Zeigefinger der den Haltegriffabschnitt fassenden Hand in Eingriff ist.

## Revendications

1. Machine de travail portative (100) comprenant une poignée (12) et une prise (20, 22) devant être manoeuvrée d'une main par un opérateur,
la prise étant ajustable sur une partie d'extrémité redressée de la poignée, et la prise comportant une section de prise (40, 50) qui s'étend verticalement de manière à être prise d'une main par l'opérateur, et une tête élargie (42, 52) qui est située sur une extrémité supérieure de la section de prise (40, 50),
la tête élargie comportant une partie élargie vers l'avant (44, 54) qui s'étend vers l'avant, et une partie élargie vers l'extérieur (46, 56) qui s'étend vers l'extérieur et présente une surface inférieure (46a, 56a) avec laquelle un index de la main prenant la section de prise peut être engagé, et
**caractérisée en ce que** la poignée s'étend diagonalement vers l'extérieur et vers le haut, et la surface inférieure (46a, 56a) de la partie élargie vers l'extérieur (46, 56) est composée d'une surface inclinée ayant un angle d'élévation (B, E) par rapport à une perpendiculaire à une ligne axiale (L(L), L(R)) de la prise (20, 22) et, lorsqu'on le regarde du côté arrière, l'angle d'élévation (B, E) est de 10° à 40° vers un côté extérieur.

2. La machine de travail portative selon la revendication 1, dans laquelle la surface inférieure (46a, 56a) de la partie élargie vers l'extérieur (46, 56) est composée d'une surface inclinée ayant un angle d'élévation (A, D) par rapport à la perpendiculaire à la ligne axiale (L(L), L(R)) de la prise (20, 22) et, lorsqu'on le regarde du côté vers l'extérieur, l'angle d'élévation (B, E) est dirigé vers un côté avant.

3. La machine de travail portative selon la revendication 1 ou 2, dans laquelle une partie arrière (42c, 52c) d'une surface supérieure de la tête élargie (42, 52) est composée d'une surface inclinée vers l'arrière et vers le bas et formée pour recevoir un pouce de la main prenant la section de prise sur la partie arrière inclinée de la surface supérieure.

4. La machine de travail portative selon l'une quelconque des revendications précédentes, dans laquelle l'angle d'élévation (B, E) vers le côté extérieur de la surface inférieure (46a, 56a) de la partie élargie vers l'extérieur est de 20° à 30°.

5. La machine de travail portative de la revendication 2 ou de l'une quelconque des revendications 3 - 4 renvoyant à la revendication 2, dans laquelle l'angle d'élévation (A, D) par rapport à la perpendiculaire à la ligne axiale (L(L), L(R)) de la prise (20, 22) et vers le côté avant de la surface inférieure (46a, 56a) de la partie élargie vers l'extérieur est de 5° à 30°.

6. La machine de travail portative de la revendication 2 ou selon l'une quelconque des revendications 3 - 5 renvoyant à la revendication 2, dans laquelle l'angle d'élévation (A) vers le côté avant de la surface inférieure (46a, 56a) de la partie élargie vers l'extérieur est de 10° à 20°.

7. La machine de travail portative selon l'une quelconque des revendications précédentes, dans laquelle une gâchette d'accélérateur (32) est agencée sur une surface avant de la prise, et
une surface de manoeuvre de la gâchette d'accélérateur est composée d'une surface lisse.

8. La machine de travail portative selon l'une quelconque des revendications 1 à 7, dans laquelle la machine de travail portative est un souffleur dorsal.

9. La machine de travail portative selon l'une quelconque des revendications 1 à 7, dans laquelle la machine de travail portative est une débroussailleuse (100).

10. La machine de travail portative selon la revendication 9, comprenant une prise droite (20) et une prise gauche (22), la machine de travail portative comprenant en outre :
une source de puissance (2) ;
une lame de coupe (4) qui est située dans une position à part de la source de puissance ; et
une tige de manoeuvre (6) qui entoure un arbre de transmission de puissance transmettant une force d'entraînement rotative de la source de puissance à la lame de coupe, dans laquelle
la poignée (12) s'étend vers la droite et vers la gauche depuis la tige de manoeuvre,
la prise droite (20) est ajustée sur une partie d'extrémité droite de la poignée, et la prise gauche (22) est ajustée sur une partie d'extrémité gauche de la poignée, sachant que la section de prise de la prise droite est prenable d'une main droite par l'opérateur et la section de prise de la prise gauche est prenable d'une main gauche par l'opérateur,
la prise droite (20) comprend une gâchette d'accélérateur qui est agencée sur une surface avant de la section de prise et est manoeuvrée par l'opérateur pour commander une sortie de la source de puissance,
la surface inférieure (46a) de la partie élargie vers l'extérieur de la prise droite (20) est composée d'une surface inclinée ayant un angle d'élévation vers un côté avant, et
la surface inférieure (56a) de la partie élargie vers l'extérieur de la prise gauche (22) est composée d'une surface inclinée ayant un angle d'élévation vers un côté avant.

11. Utilisation de la machine de travail portative (100) selon l'une quelconque des revendications 1 à 10, dans laquelle la section de prise (40, 50) est prise de la main par l'opérateur, de telle sorte que la surface inférieure (46a, 56a) de la partie élargie vers l'extérieur (46, 56) est engagée avec un index de la main prenant la section de prise.
